# EUROPÄISCHE PATENTANMELDUNG

(11) **EP 0 560 286 A2**
(43) Veröffentlichungstag der Anmeldung: **15.09.1993**
(21) Anmeldenummer: 93103765.9
(22) Anmeldetag: 09.03.1993
(51) Int. Cl.: H04N 5/65

(54) **Bildschirmfilter**

(30) Priorität: 10.03.1992 DE 9203190 U
(71) Anmelder: Tornow, Volker, D-63165 Mühlheim (DE)
(72) Erfinder: Tornow, Volker, D-63165 Mühlheim (DE)
(74) Vertreter: Flach, Dieter Rolf Paul, Dipl.-Phys.

(57) **Zusammenfassung**

Die Erfindung schafft einen verbesserten Bildschirmfilter für einen Monitor der zum Reinigen auf einfachste Art und Weise demontiert und dann wieder neu montiert werden kann. Der Bildschirmfilter weist dazu einen ganz oder teilweise umlaufend einfassenden Abdeckrahmen (3) und einen Innenrahmen (5) auf. Der frontseitige Verbindungsschenkel (3') des Abdeckrahmens (3) ist zumindest mittelbar und/oder Teile des Innenrahmens (5) sind mit der Filterscheibe (1) fest verbunden. Der Innenrahmen ist mit einem Verankerungsabschnitt (17) versehen, welcher an einer am Monitorgehäuse (23) befestigbaren Aufhäng-Einrichtung lösbar anbringbar ist. Die Aufhäng-Einrichtung (7) weist dazu eine Verankerungstasche oder einen Einhängabschnitt (19) auf.

## Beschreibung

Die Erfindung betrifft einen Bildschirmfilter nach dem Oberbegriff des Anspruches 1.

Wesentliche Schnittstelle zwischen Computer und Mensch ist der Monitor, auf dem die entsprechenden Dateninhalte wiedergegeben werden. Bei den Monitoren handelt es sich um Elektronenstrahl-Röhren, auf denen das Bild dargestellt wird. Diese Röhren sind - auch wenn zunehmend flachere Röhren in den Handel gelangen - in der Regel gekrümmt.

Bekanntermaßen kann das Arbeiten an derartigen Monitoren für die Augen durchaus sehr ermüdend sein. Insbesondere bei ungünstigem Lichteinfall sind Kontrastverschlechterungen sowie das Auftreten von möglichen Spiegeleffekten zu beklagen. Schließlich ist auch bekannt, daß immer noch Monitore im Einsatz sind, deren frontseitige Bildschirmoberfläche ungeschützt elektrostatisch aufgeladen wird, was höchst nachteilig ist.

Um also die Kontrastdarstellung eines Bildes an einem Monitor auch unter Vermeidung von Spiegeleffekten zu verbessern und/oder die unerwünschte elektrostatische Aufladung zu vermindern bzw. ganz abzuschirmen, werden seit jeher frontseitig an einem Monitor anbringbare, d. h. vor allem nachrüstbare Bildschirmfilter verwandt.

Auf dem Markt sind die unterschiedlichsten Bildschirmfilter erhältlich, die auf verschiedenste Art und Weise an einem Monitor bzw. auf dessen Frontmaske angebracht und befestigt werden können.

Bekannt sind dabei sogenannte "Klappscharnierbefestigungen", die in der Regel auf der Oberseite des Monitors unlösbar oder lösbar befestigt werden, und die über eine obenliegende und vor der Bildschirmfläche angeordnete Scharnierleiste mit der Filterscheibe und den zugehörigen Rahmenteilen schwenkbar verbunden ist. Zum Putzen muß dieser Filter komplett gelöst werden, da eine Reinigung am wackligen, hängenden Scharnier unmöglich ist.

Dazu ist auch eine alternative Ausführungsform bekannt geworden, bei der die Filterscheibe zum Reinigen aus einem Rahmen schiebend herausgenommen werden kann. Nach der Reinigung muß die Filterscheibe dann wieder in diesen Rahmen durch Einschieben montiert werden. Auch dies ist aufwendig und wenig handhabungsfreundlich.

Aufgabe der vorliegenden Erfindung ist es von daher, einen Bildschirmfilter zu schaffen, der so ausgestaltet und so an einem Monitor befestigbar ist, daß er zum Reinigen auf einfachste Art und Weise demontiert und montiert werden kann. Dabei soll die Befestigungs- und Haltevorrichtung für den Bildschirmfilter möglichst stabil und wackelfrei sein.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Um den erfindungsgemäßen Bildschirmfilter zu reinigen muß dieser nur aus einer entsprechenden Aufhäng-Einrichtung im Sinne eines Anhebens herausgenommen werden. Nach dem Reinigen kann ein entsprechender Verankerungsabschnitt am Bildschirmfilter wieder in der Aufhäng-Einrichtung eingehängt werden. Die Aufhäng-Einrichtung besteht bevorzugt aus einem aus Kunststoff bestehenden Winkelprofil, welches bevorzugt im mittleren Teil des Monitors (der aufgrund einer möglichen Krümmung der Röhre am weitesten vorne, also auf den Betrachter zu liegt) gehäuseoberseitig angebracht ist. Der Einhängabschnitt kann bevorzugt frontseitig am oberen Rand des Monitorgehäuses ausgebildet sein.

In einer bevorzugten Ausführungsform ist die Länge der Aufhäng-Einrichtung und der entsprechende Verankerungsabschnitt am Rahmen genau aufeinander abgepaßt, so daß der Bildschirmfilter ruck- und verwacklungsfrei verankert werden kann.

Als besonders günstig erweist sich, daß der erfindungsgemäße Bildschirmfilter einen zweigeteilten Rahmenaufbau mit einem äußeren Abdeckrahmen und einem Innenrahmen umfaßt. Diese beiden Rahmen können bevorzugt über eine Schnapp- oder Rastverbindung stabil und sicher miteinander verbunden werden.

In einer vorteilhaften Weiterbildung ist vorgesehen, daß der Innenrahmen abgesehen von den in der Aufhängeinrichtung einsetzbaren Verankerungsabschnitten in einer davon abweichenden Materialstärke ausgebildet sein kann, um zu gewährleisten, daß auch in diesem mit einer stärkeren Materialwand ausgebildeten Rahmen die Filterscheibe rückseitig anliegend abgestützt wird.

Bevorzugt ist also der Verankerungsabschnitt am Innenrahmen mit einer zu den sonstigen Materialwänden dünneren Wandstärke ausgebildet, so daß dieser Verankerungsabschnitt in eine entsprechende taschenförmige Aufnahme der Aufhäng-Einrichtung eingehängt werden kann. Allerdings ist die Dicke der frontseitig zu liegen kommenden Taschenwand und die Materialdicke des Verankerungsabschnittes so aufeinander abgepaßt, daß sie im wesentlichen der Gesamtdicke des sonstigen Materialwandabschnittes des Innenrahmens entspricht.

Als besonders günstig erweist sich die integrierte Unterbringung eines umlaufenden Kabelkanales. Darin kann eine rundumlaufende Ableitung zur Abschirmung der Strahlung des Monitors vorgesehen sein, die an geeigneter Stelle, bevorzugt über einen im Eckbereich des Innenrahmens vorgesehenen Kabelauslasses herausgeführt wird.

Weitere Vorteile, Einzelheiten und Merkmale der Erfindung ergeben sich nachfolgend aus dem anhand von Zeichnungen dargestellten Ausführungsbeispiel. Dabei zeigen im einzelnen:
- Figur 1 :: eine schematische Vertikalschnittdarstellung durch den oberen Rand des erfindungsgemäßen Bildschirmfilters einschließlich der zugehörigen Aufhäng-Einrichtung auf der Oberseite eines Monitorgehäuses;
- Figur 2 :: eine zum Verankerungsabschnitt gemäß Figur 1 versetzt liegende vertikale Schnittdarstellung durch den erfindungsgemäßen Bildschirmfilter;
- Figur 3 :: eine auszugsweise schematische frontseitige Ansicht des Innenrahmens des Bildschirmfilters bei abgenommenem Abdeckrahmen und bei abgenommener Filterscheibe; und
- Figur 4 :: eine ausschnittsweise perspektivische Darstellung unter teilweiser Weglassung von Teilen des erfindungsgemäßen Bildschirmfilters.

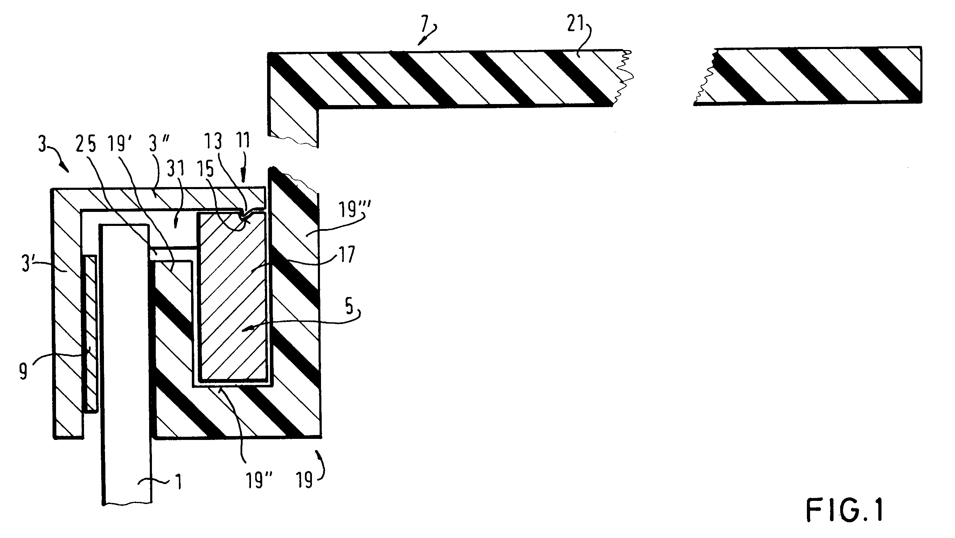

In Figur 1 ist im teilweise wiedergegebenen Vertikalquerschnitt ein erfindungsgemäßer Bildschirmfilter mit einer Filterscheibe 1, einem äußeren Abdeckrahmen 3 mit zur Filterscheibe 1 parallelem Verbindungsschenkel 3' und dazu im wesentlichen senkrecht ausgerichteten Tragschenkel 3'' sowie ein im Querschnitt rechteckförmiger Innenrahmen 5 und eine am Monitor anbringbare Aufhäng-Einrichtung 7 gezeigt.

Der umlaufende Rand der Filterscheibe 1 wird bevorzugt über eine Klebeverbindung, insbesondere einen Schaumkleber 9 mit der innenliegenden rückwärtigen Seite des Verbindungsschenkels 3' des Abdeckrahmens 3 verbunden.

Der rahmenartig umlaufende Abdeckrahmen 3 wird fertigungstechnisch an seiner rückwärtigen Seite mit dem erwähnten Innenrahmen 5, der ebenfalls rechteckförmig umläuft, verbunden. Diese Verbindung kann unterschiedlich ausgebildet sein. Möglich ist eine Klebeverbindung oder sogar eine Schraubverbindung. Bevorzugt wird entsprechend dem gezeigten Ausführungsbeispiel hier eine Klemm-, Schnapp- oder Rastverbindung 11 verwandt.

Dazu ist auf der Innenseite des Tragschenkels 3'' eine beispielsweise sägezahnförmige Nase 13 vorgesehen, die in eine entsprechende Rastausnehmung 15 der angrenzenden Wand, d. h. der Oberseite des so gebildeten Verankerungsabschnittes 17 des Innenrahmens 5 einrastet. Die Klemm-, Schnapp- oder Rastverbindung 11 kann aus mehreren zur Papierebene senkrecht hintereinander liegenden Nasen und/oder Ausnehmungen 15 oder aus einer durchgängigen Nasenleiste bestehen, die in eine entsprechende Ausnehmungsnut 15 eingreift.

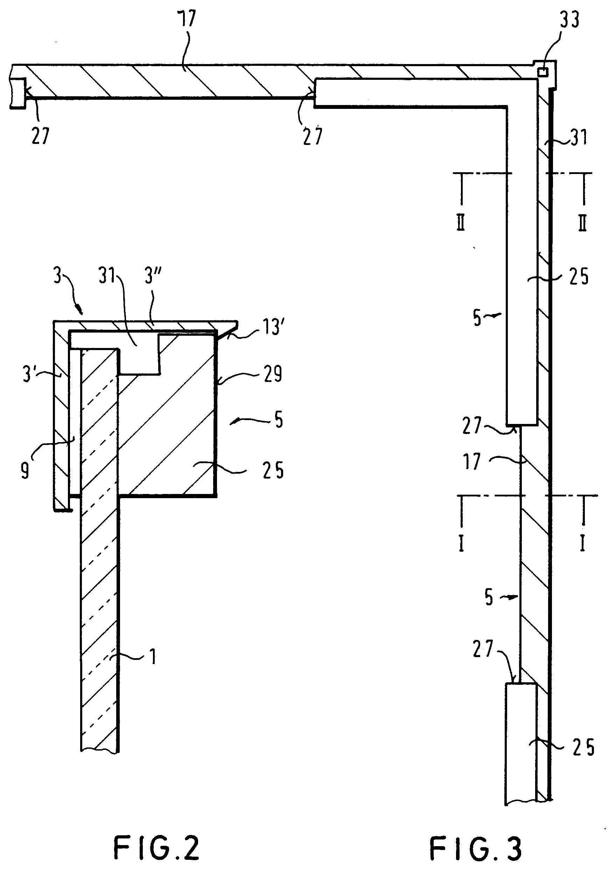

Wie aus der auszugsweisen frontseitigen Darstellung des Innenrahmens 5 aus Figur 3 hervorgeht, erstreckt sich der Verankerungsrahmen 17 jeweils nur über eine Teillänge von vorzugsweise weniger als 1/3 der Gesamtlänge einer Rahmenseite. Diese Länge des Verankerungsabschnittes 17 entspricht der in Figur 1 im Querschnitt dazu dargestellten Verankerungstasche 19, die aus einer frontseitigen Taschenwand 19', dem Taschenboden 19'' und der Rückwand 19''' gebildet ist, die in einen obenliegenden Auflagenabschnitt 21 übergeht.

Der Auflagenabschnitt 21 wird auf der Oberseite eines Monitorgehäuses 23 fest oder lösbar montiert. Eine lösbare Befestigung kann beispielsweise über einen Klettbandverschluß erfolgen, wobei die eine Klettbandhälfte auf der Oberseite des Monitorgehäuses fest aufgeklebt wird. Eine nicht lösbare Befestigung kann mittels eines Industrieklebebandes erfolgen, welches praktisch nicht lösbar auf der Oberseite des Monitorgehäuses aufgeklebt und darüber mit der Unterseite des Auflagenabschnittes 21 fest verbunden wird.

Die so gebildete vorzugsweise aus Kunststoff bestehende nach Art einer Winkelschiene gebildete Aufhäng-Einrichtung 7 wird bevorzugt im mittleren Bereich des Monitorgehäuses angebracht, welcher bei einer bestehenden Maskenkrümmung am weitesten auf den Betrachter zu liegt.

Um eine möglichst feste und auch in Seitenrichtung ruck- und verwacklungsfreie Befestigung des Bildschirmfilters am Monitorgehäuse zu gewährleisten geht der Innenrahmen 5 auf jeder Seite von seinem dort ausgebildeten Verankerungsabschnitt 17 in einen entsprechenden eine Seitenbegrenzung für den Verankerungsabschnitt 17 bildenden Verdickungsabschnitt 25 über. Insbesondere aus Figur 2 ist die Querschnittsform des Teiles des Innenrahmens 5 bildenden Verdickungsabschnittes 25 ersichtlich, die vom Prinzip her hinter dem Verankerungsabschnitt 17 liegend teilweise strichliert in Figur 1 in Querschnittsdarstellung eingezeichnet ist.

An dem jeweiligen Ende des Verankerungsabschnittes 17 ist zu Beginn des Verdickungsabschnittes 25 jeweils eine zusätzliche Einrastung 27 ausgebildet, welche beim Einstekken des Verankerungsabschnittes 17 in die Verankerungstasche 19 zu einer zusätzlichen Fixierung und verwacklungsfreien Stabilisierung des lösbaren Teiles des Bildschirmfilters gegenüber der Aufhäng-Einrichtung 7 führt und beiträgt.

Die Einrastung 27 kann gegebenenfalls nur aus in Richtung des Verankerungsabschnittes vorragenden Noppen oder aus mit echten Hinterschneidungen versehenen Einrastnasen bestehen, die mit entsprechenden Noppen oder Vertiefungen an der angrenzenden Stirnwand der seitlichen, also in Längsrichtung des Verankerungsabschnittes 17 hin offenen Verankerungstasche 19 zusammenwirken und einen Druckpunkt erzeugen.

Wie aus dem Vergleich der Schnittdarstellungen der Figuren 1 und 2 auch ersichtlich ist, ist der im wesentlichen senkrecht auf den Monitor zu laufende Tragschenkel 3'' des Abdeckrahmens 3 im Bereich des Verdickungsabschnittes 25 um ein gewisses Längsmaß weiter auf die Frontmaske des Monitorgehäuses zugeführt, so daß die dort ausgebildete Verankerungs- oder Rastnase 13' nicht in einer entsprechenden Vertiefung an der angrenzenden Wand des Innenrahmens 5, sondern mit der rückwärtigen Begrenzungswand 29 zusammenwirkt, in dem diese Wand hintergriffen wird (Fig. 2).

Wie aus Figur 1 und 2 auch ersichtlich ist ist die Anordnung derart, daß die quer zur Filterscheibe gemessene Wandstärke im unteren Bereich des Verdickungsabschnittes 25 des Innenrahmens 5 in etwa der Summe der Dicke des Verankerungsabschnittes 17 des Innenrahmens 5 plus der Wandstärke der frontseitigen Taschenwand 19' der Verankerungstasche 19 entspricht. Dadurch liegt die entsprechende Wand des Verdickungsabschnittes 25 vollflächig an der Rückseite der Filterscheibe 1 an und führt damit zu einer zusätzlichen Abstützung ohne daß hier eine zusätzliche Klebung vorgesehen sein muß.

Schließlich wird durch die konstruktive Anordnung noch ein zusätzlicher Kabelkanal 31 gebildet, in welchem umlaufend ein Kabel oder eine Ableitung vorgesehen sein kann, worüber die Filterscheibe 1 geschirmt, d. h. in der Regel geerdet werden kann, um eine elektrostatische Aufladung zu vermeiden. Ein im Kabelkanal 31 verlegtes Kabel kann an einem der Eckpunkte des Abdeckrahmens 3, bevorzugt bei einer Auslaßstelle 33 herausgeführt sein.

Die Anordnung des Rahmens ist derart, daß an jeder der vier Seiten ein gleich langer Verankerungsabschnitt 17 ausgebildet ist. Dadurch kann der Rahmen in vorbestimmter Größe bei herkömmlichen Monitoren aber auch bei einer Drehung um 90^{o} beispielsweise bei Ganzseiten-Monitoren verwandt werden, in dem jeweils der dann obenliegende Verankerungsabschnitt in der am Monitor oben angebrachten Aufhängeinrichtung eingehängt werden kann.

Lediglich zur Verwendung bei unterschiedlich großen Monitortypen müssen unterschiedliche Größen für den Rahmen gefertigt werden, wobei allerdings die Verankerungsabschnitte für alle unterschiedlichen Monitorgrößen gleiche Maße aufweisen können.

Der äußere Abdeckrahmen 3, der Innenabdeckrahmen, sowie die Aufhäng-Einrichtung 7 selbst können aus einem Kunststoff-Spritzgußteil oder einem tiefgezogenen Kunststoffteil bestehen.

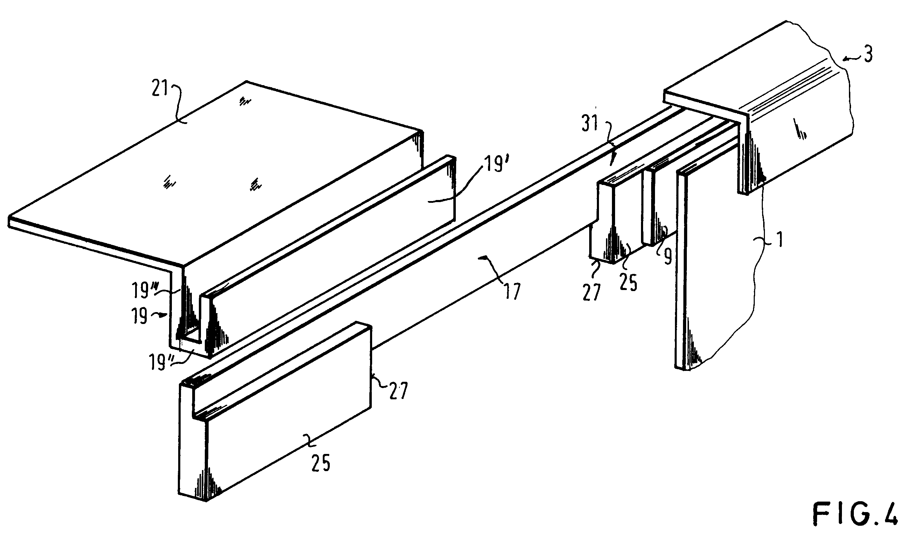

In Figur 4 ist die Ausbildung des Bildschirmfilters in vereinfachter Darstellung ausschnittweise unter Weglassung von Teilen perspektivisch gezeigt. Daraus ist auch deutlich ersichtlich, daß die Länge des Verankerungsabschnittes 17 durch die Stirnseiten des Verdickungsabschnittes 25 begrenzt ist. Abweichend von dem gezeigten Ausführungsbeispiel können die Stirnseiten 27 vor allem zu ihrer Unterseite hin wie auch die frontseitige Taschenwand 19 zu ihrer Oberseite hin abgerundete Kanten oder Übergänge aufweisen. Dadurch ergibt sich beim Aufstecken ein leichteres automatisches Selbstzentrieren der vorderen Taschenwand 19' zwischen den als Einrastung 27 bezeichneten stirnseitigen Begrenzungsflächen des Verdickungsabschnittes 25.

Aus Figur 4 ist letztlich auch die im Querschnitt U-förmige und in Längsrichtung der U-förmigen Vertiefung seitlich offene Verankerungstasche 19 ersichtlich, die im Verankerungsfall auf den Verankerungsabschnitt 17 aufgesteckt wird. Natürlich kann abweichend vom gezeigten Ausführungsbeispiel auch eine andersartige Einhängeinrichtung verwandt werden, die beispielsweise abweichend von der zeichnerischen Darstellung gemäß Figur 4 nicht eine durchgängige Tasche oder U-förmige Aufnahmevertiefung, sondern beispielsweise nur zwei im Stirnseitenbereich U-förmige und versetzt liegende Aufnehmungen mit einer vergleichsweisen kurzen Längserstreckung aufweist. Aber auch weitere abgewandelte Aufnahme- und Steckverbindungen zur Aufnahme des Verankerungsabschnittes 17 in dem Einsteckabschnitt 19 sind möglich, beispielsweise in Form von an dem Auflagenabschnitt an seiner Frontseite vorstehenden Steckzapfen, die durch entsprechende Lochausnehmungen im Verankerungsabschnitt 17 hindurchgreifen oder einrasten.

## Patentansprüche

1. Bildschirmfilter für einen Monitor
- mit einer Filterscheibe (1),
- mit einem den Rand der Filterscheibe (1) ganz oder teilweise umlaufend einfassenden Abdeckrahmen (3)
- der im Querschnitt unter Ausbildung eines zur Filterscheibe (1) parallelen Verbindungsschenkels (3') und eines im wesentlichen dazu senkrecht wegstehenden Tragschenkels (3'') winkelförmig gebildet ist und
- mit einem Innenrahmen (5),
- wobei der frontseitige Verbindungsschenkel (3') des Abdeckrahmens (3) zumindest mittelbar und/oder Teile des Innenrahmens (5) mit der Filterscheibe (1) fest verbunden ist bzw. sind,
- und mit einem am Innenrahmen (5) ausgebildeten oder damit verbundenen Verankerungsabschnitt (17), der an einer am Monitorgehäuse (23) befestigbaren Aufhäng-Einrichtung (7) lösbar anbringbar ist,
- wozu die Aufhäng-Einrichtung (7) eine Verankerungstasche oder einen Einhängabschnitt (19) umfaßt,
- in welche bzw. an welchem der Verankerungsabschnitt (17) des Innenrahmens (5) wieder entfernbar einsetz- bzw. einhängbar ist.

2. Bildschirmfilter nach Anspruch 1, **dadurch gekennzeichnet,** daß die Verankerungstasche (19) der Aufhäng-Einrichtung (7) nach oben hin geöffnet ist und der Verankerungsabschnitt (17) des Innenrahmens (5) von oben her in die Verankerungstasche (19) einsetzbar ist.

3. Bildschirmfilter nach Anspruch 1 oder 2, **dadurch gekennzeichnet,** daß die Länge der Verankerungstasche (19) und/oder die Länge des Verankerungsabschnittes (17) des Innenrahmens (5) weniger als 1/2, vorzugsweise weniger als 1/3 der jeweiligen Seitenlänge des Innenrahmens (5) beträgt.

4. Bildschirmfilter nach einem der Ansprüche 1 bis 3, **dadurch gekennzeichnet,** daß von jeder der vier Seiten des Innenrahmens (5) ein vorzugsweise in der Mitte liegender Verankerungsabschnitt (17) ausgebildet ist.

5. Bildschirmfilter nach Anspruch 4, **dadurch gekennzeichnet,** daß der an jeder Seite des Innenrahmens (5) ausgebildete Verankerungsabschnitt (17) gleich lang ist.

6. Bildschirmfilter nach einem der Ansprüche 1 bis 5, **dadurch gekennzeichnet,** daß die Länge des Verankerungsabschnittes (17) des Innenrahmens (5) der Länge der Verankerungstasche (19) entspricht.

7. Bildschirmfilter nach einem der Ansprüche 1 bis 6, **dadurch gekennzeichnet,** daß angrenzend an den Verankerungsabschnitt (17) der Innenrahmen (5) in einen Verdickungsabschnitt (25) mit gegenüber dem Verankerungsabschnitt (17) größerer Materialstärke übergeht.

8. Bildschirmfilter nach Anspruch 7, **dadurch gekennzeichnet,** daß die Materialdicke des Verdickungsabschnittes (25) des Innenrahmens (5) im wesentlichen der Summe der Dicke des Verankerungsabschnittes (17) plus der Dicke der frontseitigen Taschenwand (19') der Verankerungstasche (19) entspricht.

9. Bildschirmfilter nach einem der Ansprüche 1 bis 8, **dadurch gekennzeichnet,** daß zwischen der Innenseite des Tragschenkels (3'') und dem Verdickungsabschnitt (25) des Innenrahmens (5) bzw. der tragschenkelseitigen Stirnfläche der frontseitigen Taschenwand (19') der Verankerungstasche (19) ein Abstand unter Bildung eines Kabelkanales (31) vorgesehen ist.

10. Bildschirmfilter nach Anspruch 9, **dadurch gekennzeichnet,** daß im Kabelkanal (31) ein Abschirmkabel für die Filterscheibe (1) umlaufend verlegt und zumindest aus einem Auslaß (33) vorzugsweise im Eckbereich des Innenrahmens (5) herausgeführt ist.

11. Bildschirmfilter nach einem der Ansprüche 1 bis 10, **dadurch gekennzeichnet,** daß die frontseitige Begrenzungsfläche der Verankerungstasche (19) und/oder die frontseitige Begrenzungsfläche des Verdickungsabschnittes (25) des Innenrahmens (5) an der rückwärtigen Seite der Glasscheibe zumindest mittelbar anliegt.

12. Bildschirmfilter nach einem der Ansprüche 1 bis 11, **dadurch gekennzeichnet,** daß der Tragschenkel (3'') des Abdeckrahmens (3) mit dem Innenrahmen (5) über eine zwischen der Innenseite des Tragschenkels (3'') und der in Umlaufrichtung nach außen gerichteten Stirnfläche des Innenrahmens (5) über eine Klemm-, Schnapp- oder Rastverbindung (11) miteinander verbunden sind.

13. Bildschirmfilter nach Anspruch 12, **dadurch gekennzeichnet,** daß die Klemm-, Schnapp- oder Rastverbindung (11) jeweils zumindest eine Rastnase (13) umfaßt, die in eine jeweils am anderen Teil vorgesehen Rastausnehmung (15) oder hinterschnittene Kante einschnappend eingreift.

14. Bildschirmfilter nach Anspruch 12 oder 13. **dadurch gekennzeichnet,** daß die Rastnase (13) vorzugsweise auf der Innenseite des im wesentlichen auf die Frontmaske des Monitorgehäuses (23) zulaufenden Tragschenkels (3'') nach innen vorragend ausgebildet ist, die mit einer entsprechenden an der angrenzenden Stirnwand des Verankerungsabschnittes (17) ausgebildeten Rastausnehmung (15) zusammenwirkt.

15. Bildschirmfilter nach einem der Ansprüche 12 bis 14, **dadurch gekennzeichent,** daß die Rastnase (13) vorzugsweise auf der Innenseite des im wesentlichen auf die Frontmaske des Monitorgehäuses (23) zulaufenden Tragschenkels (3'') nach innen vorragend ausgebildet ist, die den entsprechenden Verdikkungsabschnitt (25) des Innenrahmens (5) monitorgehäuseseitig hintergreift.

16. Bildschirmfilter nach einem der Ansprüche 1 bis 15, **dadurch gekennzeichnet,** daß am Übergang vom Verdickungsabschnitt (25) zum Verankerungsabschnitt (17) des Innenrahmens (5) jeweils in Richtung des Verankerungsabschnittes (17) ausgerichtete Einrastungen (27) vorgesehen sind, die mit den betreffenden stirnseitigen Wandabschnitten der in Seitenrichtung hin offenen Verankerungstasche (19) zusammenwirken.
